# EUROPEAN PATENT APPLICATION

(11) **EP 4 302 871 A1**
(43) Date of publication of application: **10.01.2024**
(21) Application number: 23179396.9
(22) Date of filing: 15.06.2023
(51) Int. Cl.: B01J 21/04, B01J 23/46, B01J 23/89, B01J 35/02, B01J 37/00, B01J 37/02, B01J 37/08, B01J 37/18

(54) **RUTHENIUM-BASED NICKEL-ALUMINUM CATALYST AND METHODS OF PREPARATION AND USE THEREOF**

(30) Priority: 15.06.2022 CN 202210676965; 13.06.2023 WO PCT/CN2023/099873
(71) Applicant: The Hong Kong Polytechnic University, Hong Kong (CN)
(72) Inventor: LI, Molly Meng-Jung, Kowloon (HK); CHENG, Ka Wai Eric, Kowloon (HK); LAU, Shu Ping, Kowloon (HK); NIU, Shuangxia, Kowloon (HK); ZHAI, Lingling, Kowloon (HK); WONG, Chiu Shek, Kowloon (HK)
(74) Representative: Modiano, Gabriella Diana

(57) **Abstract**

A ruthenium-based nickel-aluminum catalyst for catalytic production of nitrogen and hydrogen from ammonia, with ruthenium as the main active component, nickel oxide and alumina as the carrier, and one or more of alkali metals, such as sodium and potassium, or alkaline earth metals such as calcium as a promoter; and a method of preparing the catalyst including: (a) adding nickel oxide and alumina to a mixed solution comprising ruthenium ions or a promoter for impregnation; (b) drying and calcining the carrier comprising the ruthenium and the promoter obtained in step (a) for activation, to obtain the ruthenium-based nickel-aluminum catalyst.

## Description

### CROSS-REFERENCE TO RELATED APPLICATIONS

This application claims priority from China Patent Application Number 202210676965.7, filed on June 15, 2022, the content of which is hereby incorporated by reference in its entirety.

### TECHNICAL FIELD

The present disclosure relates to a method for preparing a highly efficiency ruthenium-based nickel-aluminum catalyst for catalytic production of nitrogen and hydrogen from ammonia, as well as use of the same.

### BACKGROUND ART

The demand for energy is rising rapidly and the concern for environmental protection has been widely discussed by the international community. In recent years, numerous countries and corporate entities around the world have drawn up plans to reduce carbon emissions. Hydrogen energy has attracted attention among many next generation energy sources due to its many advantages. First of all, hydrogen is undoubtedly the cleanest among all existing fuels in terms of emissions. Fossil fuels widely used currently emit greenhouse gases, such as carbon dioxide during combustion, thus causing air and water pollution. In contrast, hydrogen, as fuel in a cell fuel, is combined with oxygen in the atmosphere to form water. Secondly, fuel cells do not emit carbon oxide during operation. Although hydrogen is arguably one of the cleanest energy sources, the properties of hydrogen, such as flammability and explosiveness, bring about some technical problems, such as safe storage and transportation, which directly affect applications of hydrogen energy technology on large scale.

Ammonia has the molecular formula of NH₃ and is a colorless gas with pungent odor at an ambient temperature. Ammonia is one of the most produced inorganic compounds in the world, because of its wide range of applications, wherein about 80% of ammonia is used to make fertilizers. Ammonia can be liquefied at a lower pressure than hydrogen. As a result, ammonia may be stored in a relatively simpler environment, which can reduce storage costs. In recent years, the development of methods for concerting ammonia to hydrogen has generated a great deal of research interest.

CN 110270338 B teaches a nickel and/or ruthenium-based ammonia decomposition catalyst and a method for preparing the same. The active ingredient of which is one or two of nickel and ruthenium, the carrier comprises graphitized activated carbon and additives, and the promoter is one or more of oxides of alkali metals and oxides of alkaline earth metals, wherein the content of nickel is in an amount of 8-24% and the content of ruthenium is in an amount of 0.5-12% by weight of the catalyst. The catalyst has an ideal operating temperature of 550°C to 750°C. However, the catalyst has low catalytic activity at a low temperature, as a result, the content of ammonia is high in the exhaust gas and the ammonia conversion rate is poor, rendering it unsuitable for industrialization or large-scale use.

CN 113289693 A teaches an ammonia decomposition catalyst comprising ruthenium as the main active ingredient, and magnesium oxide and potassium oxide as the carrier, wherein ruthenium is in an an amount of 3-5%, and magnesium oxide and potassium oxide are in an an amount of 90.4-95.6% and 1.4-4.6% respectively, by weight of the catalyst. While the catalyst can be used at a temperatures as low as 500°C, the effectiveness of the catalyst is affected by factors such as heat transfer and particle size, when scaled up to the industrial level. Also, the catalyst has a high amount of ruthenium, which significantly increase the cost of the catalyst.

There is thus a need for improved ammonia decomposition catalysts that addresses at least some of the disadvantages of existing catalysts.

### SUMMARY

The present disclosure provides a cost effective and highly efficient catalyst for decomposing ammonia gas to hydrogen and nitrogen gas, and a method of preparing the same. The present disclosure also provides a method of producing hydrogen and nitrogen by catalytic decomposition of ammonia using the catalyst.

The present disclosure provides a ruthenium-based nickel-aluminium catalyst for catalytic production of a large amount of nitrogen and hydrogen from ammonia, with ruthenium as a main active component, oxides of nickel and aluminium such as nickel oxide (NiO) and aluminium oxide (Al₂O₃) as a carrier, and one or more of alkali metals such as sodium and potassium or alkaline earth metals such as calcium, as a promoter.

The present disclosure provides a method for preparing the aforementioned ruthenium-based nickel-aluminum catalyst, comprising: (a) adding a crushed carrier to a mixed solution comprising ruthenium ions and a promoter for impregnation; and (b) drying and calcining the carrier comprising the ruthenium and the promoter obtained in step (a) for activation, to obtain the catalyst. In an certain embodiments, a dispersant, such as one or more of iron oxide, silicon carbide, activated carbon and silicon oxide, is added to the catalyst obtained in the aforementioned step (b).

The present disclosure provides the use of the aforementioned catalyst in production of hydrogen. It has been experimentally confirmed that the concentration of residual ammonia in the emission gas can be surprisingly reduced to less than 0.1 vol% with the catalyst of the present disclosure at a reaction temperature of 550-600°C and at a gas hourly space velocity of 6000 h⁻¹ of ammonia, and such a conversion is close to the highest conversion limited by the thermodynamics of the ammonia decomposition reaction. Such a high conversion makes the subsequent purification process of the residual ammonia much easier.

The ruthenium-based nickel-aluminum catalyst described herein has excellent stability. The decomposition temperature of ammonia can be significantly reduced by about 150-200°C, compared with the iron- or nickel-based catalysts currently used in industry. The present catalyst is suitable for industrialization and can achieve ammonia conversion with a high gas hourly space velocity at a lower temperature in large-scale industrial production. In addition, the method of preparing the catalyst described herein is straight forward and cost effective.

In one aspect, the present disclosure provides a method of preparing ruthenium-based nickel-alumina catalyst for catalytic production of nitrogen and hydrogen from ammonia, comprising:
(a) adding a carrier comprising nickel oxide and alumina to a mixed solution comprising ruthenium ions as an active component and a promoter for impregnation; and
(b) drying and calcining the carrier comprising the ruthenium and the promoter obtained in step (a) for activation, to obtain the ruthenium-based nickel-aluminum catalyst for ammonia decomposition.

In certain embodiments, the method further comprises step (c) of adding a dispersant to the ruthenium-based nickel-aluminum catalyst obtained in step (b).

In certain embodiments, the carrier is prepared by mixing, crushing and drying nickel oxide and alumina, and the mixed solution of ruthenium ion and the promoter is prepared by dissolving a metal salt of ruthenium ions and a metal salt of the promoter in deionized water simultaneously or separately.

In certain embodiments, the calcination for activation is performed at 350-900°C under an atmosphere comprising hydrogen, ammonia, or a gas mixture thereof for 3-5h.

In certain embodiments, the oxides of nickel and alumina are NiO and Al₂O₃, respectively; the metal salt of the ruthenium ion comprise ruthenium chloride and/or ruthenium chloride hydrate.

In certain embodiments, the promoters comprises one or more of sodium oxide, potassium oxide, calcium oxide, sodium hydroxide, potassium hydroxide, calcium hydroxide, sodium acetate, potassium acetate and calcium acetate.

In an certain embodiments, the dispersant comprises one or more of iron oxide, silicon carbide, activated carbon, and silicon oxide.

In one embodiment, ruthenium is in an amount of 0.5-5%, the carrier is in an amount of 85-98%, and the promoter is in an amount of 1-10% by mass of the catalyst.

In one embodiment, the molar ratio of the nickel oxide and the alumina to the carrier is from 1:4 to 1:5, respectively.

In an certain embodiments, the mass ratio of the dispersant to the active component + the carrier + the promoter is from 1:100 to 1:3.

In certain embodiments, the nickel oxide and the alumina are mixed and crushed at a molar ratio of 2:3 to 1:18.

In certain embodiments, the catalyst is subjected to activation twice before actual application, the gas used during the first activation is a gas mixture of hydrogen and nitrogen with a 5% mass percent concentration of hydrogen in the mixture, and the gas used during the second activation is ammonia gas with a high purity of 99.99%.

In a second aspect, provided herein is a ruthenium-based nickel-aluminum catalyst for ammonia decomposition, wherein, ruthenium is in an amount of 0.5-5%, a carrier comprising oxides of nickel and aluminum is in an amount of 85-98%, and a promoter is in an amount of 1-10% by mass of the catalyst.

In certain embodiments, nickel oxide and alumina are NiO and Al₂O₃, respectively.

In certain embodiments, the molar ratio of nickel oxide to alumina is from 2:3 to 1:18.

In certain embodiments, the promoter comprises one or more of sodium oxide, potassium oxide, calcium oxide, sodium hydroxide, potassium hydroxide, calcium hydroxide, sodium acetate, potassium acetate, and calcium acetate.

In certain embodiments, the catalyst further comprises a dispersant, and the dispersant comprises one or more of iron oxide, silicon carbide, activated carbon, silicon oxide.

In certain embodiments, the mass ratio of the dispersant to the active component, the carrier, and the promoter is from 1:20 to 1:4.5.

In certain embodiments, the catalyst is in a form of particles in the range of 18-80 mesh, such as 18-70 mesh, 18-60 mesh, 18-50 mesh, 18-45 mesh, 20-70 mesh, 30-60 mesh, 45-60 mesh, or in the range of 45-60 mesh.

In the third aspect, the present disclosure provides the use of the catalyst disclosed herein in the catalytic production of hydrogen and nitrogen from ammonia.

### BRIEF DESCRIPTION OF DRAWINGS

The above and other objects and features of the present disclosure will become apparent from the following description of the disclosure, when taken in conjunction with the accompanying drawings.

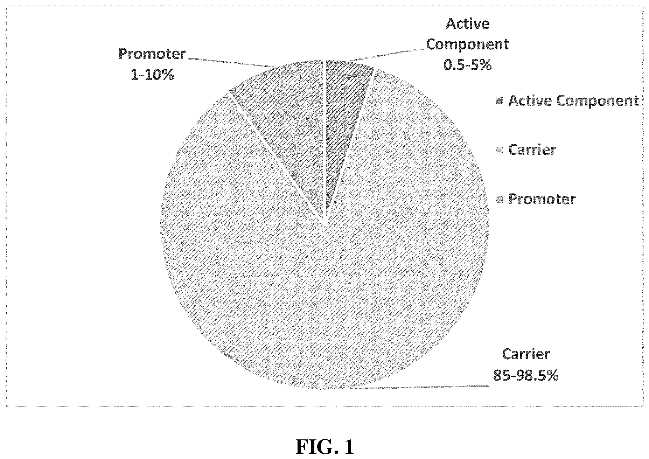

**Figure 1** shows a schematic diagram of the weight content of each component in the catalyst described herein.
**Figure 2** shows a schematic diagram of preparation process of the catalyst described herein.
**Figure 3** is a schematic diagram of testing catalyst described herein in ammonia conversion.

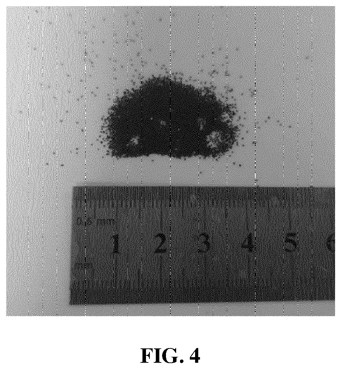

**Figure 4** shows a sample of the catalyst synthesized in Example 3 of the present application.
**Figure 5** shows a simulation of the reaction tube comprising the catalyst.

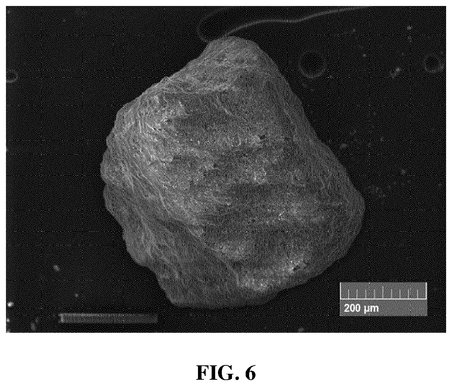

**Figure 6** shows a scanning electron microscope image of the carrier (nickel oxide) at a scale of 200 µm.

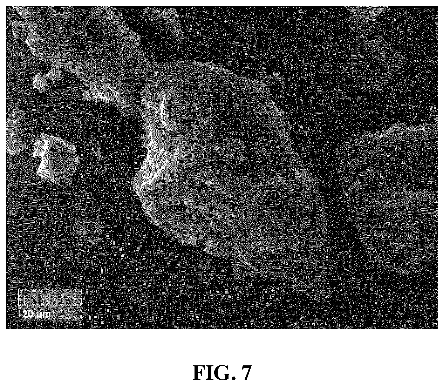

**Figure 7** shows a scanning electron microscope image of the catalyst synthesized in Example 3 with a scale bar of 20 µm.

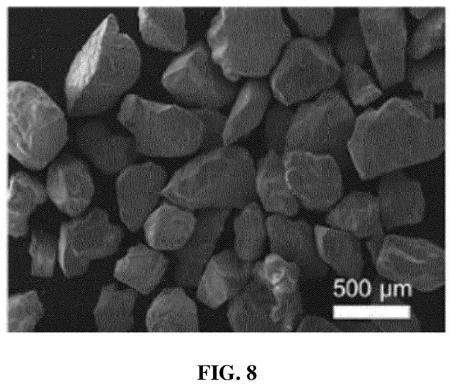

**Figure 8** shows a scanning electron microscope image of the dispersant (iron oxide) with a scale bar of 500 µm.
**Figure 9** shows a comparative graph of ammonia decomposition by the catalyst of the present application prepared in Example 3 and a commercially available catalyst.

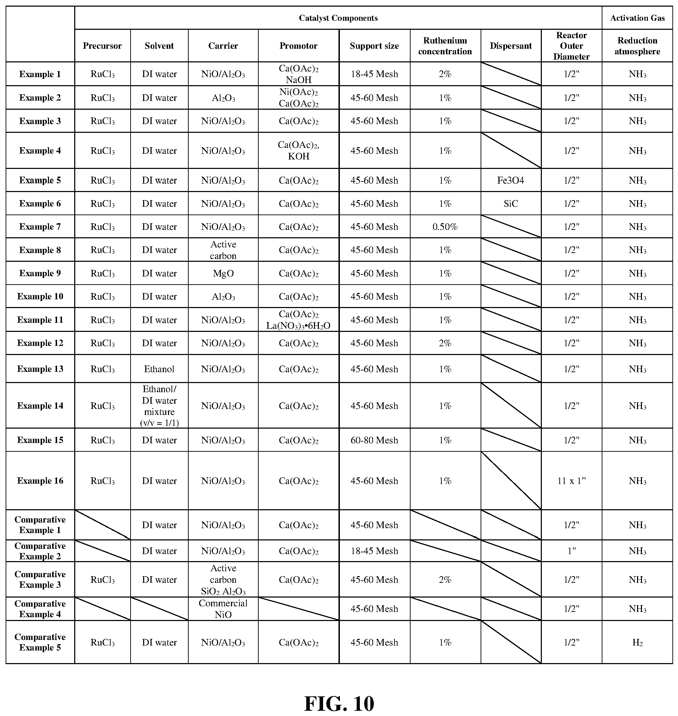

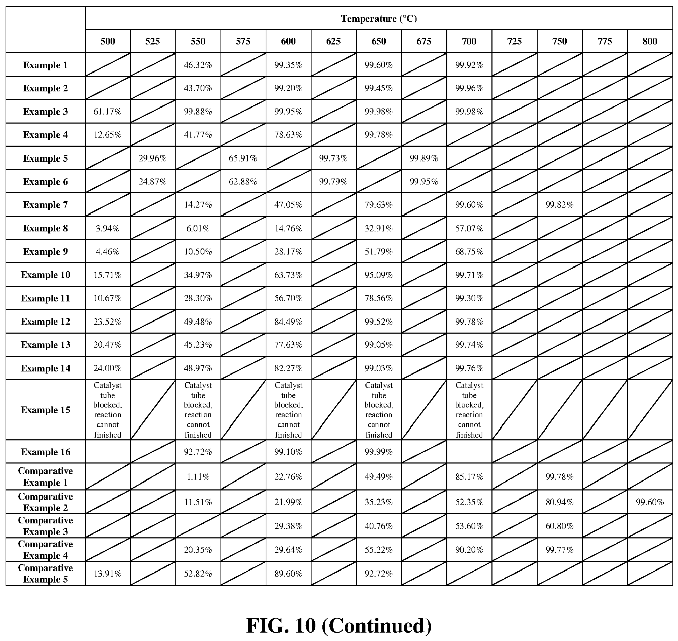

**Figure 10** shows a table summarizing the components of the catalysts prepared in the examples, the activation gas, and the results of ammonia decomposition experiments conducted at various temperatures.

### DETAILED DESCRIPTION

Throughout the present disclosure, unless the context requires otherwise, the word "comprise" or variations such as "comprises" or "comprising", will be understood to imply the inclusion of a stated integer or group of integers but not the exclusion of any other integer or group of integers. It is also noted that in this disclosure and particularly in the claims and/or paragraphs, terms such as "comprises", "comprised", "comprising" and the like can have the meaning attributed to it in U.S. Patent law; e.g., they can mean "includes", "included", "including", and the like; and that terms such as "consisting essentially of" and "consists essentially of" have the meaning ascribed to them in U.S. Patent law, e.g., they allow for elements not explicitly recited, but exclude elements that are found in the prior art or that affect a basic or novel characteristic of the present invention.

Furthermore, throughout the present disclosure and claims, unless the context requires otherwise, the word "include" or variations such as "includes" or "including", will be understood to imply the inclusion of a stated integer or group of integers, but not the exclusion of any other integer or group of integers.

The use of the singular herein includes the plural (and vice versa) unless specifically stated otherwise. In addition, where the use of the term "about" is before a quantitative value, the present teachings also include the specific quantitative value itself, unless specifically stated otherwise. As used herein, the term "about" refers to a ±10%, ±7%, ±5%, ±3%, ±1%, or ±0% variation from the nominal value unless otherwise indicated or inferred.

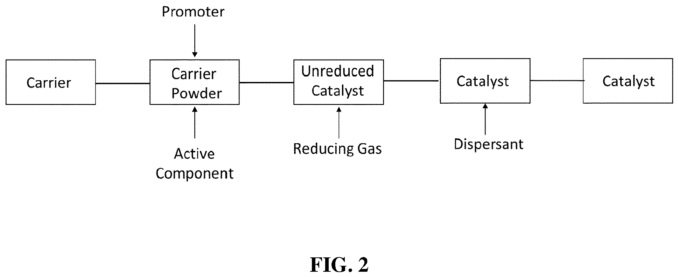

The present disclosure provides a method of preparing a ruthenium-based nickel-aluminum catalyst for catalytic production of nitrogen and hydrogen from ammonia. Figure 2 presents a flow chart illustrating the steps of the method in accordance with certain embodiments described herein, and which mainly comprises:
(a) adding a carrier comprising nickel oxide and alumina to a mixed solution comprising ruthenium as an active component and a promoter for impregnation; and
(b) drying and calcining the carrier comprising the ruthenium and the promoter obtained in step (a) for activation, to obtain a finished product, *viz,* ruthenium-based nickel-aluminum catalyst for ammonia decomposition.

In step (a) above, the carrier can be in an amount of 85-98% by mass of the catalyst, e.g. 86-97%, 87-96%, 88-95%, 89-94%, 90-98%, 92-98%, 95-98%. The ruthenium may be a metal salt of the ruthenium ion, such as ruthenium chloride or ruthenium chloride hydrate. Ruthenium can be in an amount of 0.5-5% by mass of the carrier, e.g. 0.5-4%, 1-3%, 1-2%, 1.2%, 1.5%, 1.8%, etc. The promoter can comprises one or more of an alkali metal such as sodium and potassium or an alkaline earth metal such as calcium, wherein the promoter can be in an amount of 1-10% by mass of the catalyst, e.g. 1-9%, 1-8%, 1-7%, 1-6%, 1-5%, 2-10%, 3-10%, 4-8%, 5-9%, 6-10%, 4-7%, 7-10%. In certain embodiments, the promoter comprises one or more of sodium oxide, potassium oxide, calcium oxide, sodium hydroxide, potassium hydroxide, calcium hydroxide, sodium acetate, potassium acetate, and calcium acetate. In a certain embodiments, the promoter is calcium acetate.

In step (a) above, the carrier may be prepared by crushing, mixing, and drying nickel oxide and alumina. The nickel oxide and alumina can be crushed by an conventional method in the art, such as a pulverizer. After crushing, particles of 18-80 mesh, such as 18-70 mesh, 18-60 mesh, 18-50 mesh, 18-45 mesh, 20-70 mesh, and 30-60 mesh, preferably 45-60 mesh, can be selected by screening.

After obtaining the crushed nickel oxide and alumina, they can be mixed at a molar ratio of 1:18 to 2:3, and the mixture can subsequently treated at 65-95°C for 2-24 h to obtain the carrier. In certain embodiments, the oxides of nickel and aluminum may be mixed in a vacuum oven at molar ratios of 2:3 to 1:15, 2:3 to 1:10, 3:7 to 1:10, 3:7 to 1:9, 3:7 to 3:17, 3:7 to 1:4, 1:2.8 to 1:4.5, 3:17 to 1:4, 1:4 to 3:7, 1:17, 1:16, 1:15, 1:14, 1:10,1:8,1:6,1:5,1:4.5,2:15,2:2, about 1 to about 4.5; about 1 to about 2.8, respectively, etc. In certain embodiments, the temperature for drying is from 90-95°C. A person skilled in the art may select the drying device and the drying time based on practical needs. In certain embodiments, the molar ratio of nickel oxide and alumina to the carrier is from 1:4 to 1:5, respectively.

In step (a) above, the ruthenium and the promoter may be added simultaneously or separately to a certain amount of deionized water and stirred at 550-850 rpm for more than 30 min. The solution of metal salts of ruthenium and the promoter may be dispersed by ultrasonication. The carrier comprising the mixture of dried nickel oxide and alumina is then poured into the solution of ruthenium and the promoter, the stirring speed is reduced to 500 rpm or less, and the stirring is maintained for a period of time, e.g. 5-10 min, followed by standing for 5-10 min. The stirring and standing are repeated at least 3 times, such as 4, 5 or 6 times. The mixture is subjected to suction filtration and the sample is then placed in a vacuum oven and allowed to stand for at least 24h at 90-99°C, e.g. 95°C.

In step (b) above, the mixture obtained in step (a) is placed in a tube furnace, aerated with a reducing gas such as hydrogen, and maintained for a period of time, such as 20-40 min, preferably 30 min. The mixture is then heated to a reaction temperature of 550°C-750°C at a rate of 5°C per minute, and maintained for 3-6h under hydrogen atmosphere. Thereafter, the mixture is allowed to naturally cool down to the room temperature to obtain the activated catalyst. In another embodiment, the catalyst can be activated by calcination at 550°C-750°C for 3-5h under mixture atmosphere of nitrogen and oxygen or hydrogen gas. In one embodiment, Aeration with the reducing gas is performed for 25-40 min, 30-40 min or 35 min; the reaction temperature is 550°C, 600°C, 625°C, 700°C or 750°C. After completion of the reaction, the reaction mass is recovered. In a preferred embodiment, the activated catalyst is obtained by screening with a filter of 45-60 mesh.

In an optional embodiment, after step (b) above, a further step (c) may be included: adding a dispersant to the catalyst. In one embodiment, the dispersant comprises one or more of iron oxide, silicon carbide, activated carbon, and silicon oxide, and the dispersant has a particle size of 18-80 mesh. In a specific embodiment, the dispersant, such as silicon carbide powder (in 45-60 mesh), is placed in a vacuum oven and allowed to stand at 95°C for 24h. Subsequently, the dispersant powder is physically mixed with alumina and nickel oxide comprising calcium and ruthenium to obtain the catalyst. In one embodiment, the mass ratio of the dispersant to the active component, the carrier, and the promoter is from 1:100 to 1:3, reepstively.

The catalyst described herein may be subjected to activation twice before application. In certain embodiments, the gas used for activation comprises hydrogen, ammonia, or a mixture thereof. In certain embodiments, the gas for activation further comprises nitrogen, oxygen, or a mixture thereof. The gas used during the first activation can be a gas mixture of hydrogen and nitrogen with a 5% mass percent concentration of hydrogen in the mixture; the gas used for the second time is ammonia gas with a high purity of 99.99%.

In certain embodiments, the method of preparing the ruthenium-based nickel-aluminum catalyst for catalytic production of nitrogen and hydrogen from ammonia comprises:
Step 1: dispersing a metal salt of ruthenium in water by, for example, ultrasonication, to obtain a solution of the active component;
Step 2: Adding a promoter separately or simultaneously to the solution of step 1 and stirring at 550-850 rpm for 5-30 min;
Step 3: Adding a carrier comprising alumina and nickel oxide to the solution of the active component;
Step 4: Stirring the solid-liquid mixture obtained in step 3 for 5-30 min, then allowing the mixture to stand for 5-30 min;
Step 5: Repeating step 4 three times until the ruthenium content reaches the target loading and a precipitate forms;
Step 6: subjecting the precipitate obtained in step 5 to suction filtration, washing and drying;
Step 7: Calcining the dried material obtained in step 6 at 500-750°C, and reducing with hydrogen gas to obtain said catalyst.

The present disclosure provides a ruthenium-based nickel-aluminum catalyst for ammonia decomposition for catalytic production of nitrogen and hydrogen from ammonia, wherein the ruthenium is in an amount of 0.5-5%, the carrier comprising nickel oxide and alumina is in an amount of 85-98%, and the promoter is in amount of 1-10% by mass of the catalyst.

In certain embodiments, the molar ratio of nickel oxide to alumina in the catalyst is from 2:3 to 1:18; 2:3 to 1:15; 2:3 to 1:10; 3:7 to 1:10; 3:7 to 1:9; 3:7 to 3:17; 3:7 to 1:4; 1:2.8 to 1:4.5; 3:17 to 1:4; or 1:4 to 3:7, respectively. In certain embodiments, the molar ratio of nickel oxide to alumina in the catalyst is about 1 to about 4.5; or about 1 to about 2.8, respectively.

In certain embodiments, the promoter comprises one or more of sodium oxide, potassium oxide, calcium oxide, sodium hydroxide, potassium hydroxide, calcium hydroxide, sodium acetate, potassium acetate, and calcium acetate.

In certain embodiments, the catalyst further comprises a dispersant. The dispersant can comprise one or more of iron oxide, silicon carbide, activated carbon, and silicon oxide, wherein a mass ratio of the dispersant to the active component, the carrier, and the promoter is from 1:100 to 1:3, such as 1:7.

In certain embodiments, the ruthenium is present in an amount of 0.5-5% by mass of the carrier, such as 0.5-4%, 0.5-3.5% ,0.5-3%, 0.5-2.5%, 0.5-2%, 0.5-1.5%, 0.5-1%, 0.75-1%,0.75-1.25%, 1-3%, 1-2%, 2-5%, 3-4%, 1%, 1.5%, 2%, or 3%. In certain embodiments, the the ruthenium is in an amount of about 1% by mass of the carrier.

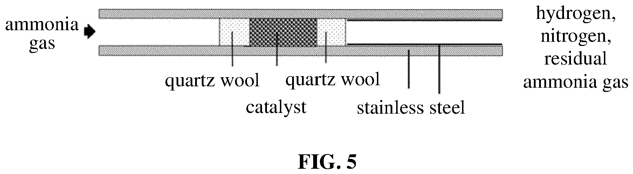

Methods and apparatuses for catalytic decomposition of ammonia are well known in the art, and are not particularly limited. Disclosed herein is an exemplary apparatus and method for catalytically decomposing ammonia using the catalyst described herein. As shown in FIG. 5, the catalyst is fixed with quartz wool in a stainless steel tube, the tube is aerated with ammonia gas, and the ammonia is decomposed at a temperature above 550°C to yield hydrogen, nitrogen and a very small amount of residual ammonia. It was experimentally verified that the concentration of residual ammonia in the emission gas can be surprisingly reduced to less than 0.1 vol% at a reaction temperature of 550-600°C with a gas hourly space velocity (GHSV) of 6000 h⁻¹of ammonia.

The catalyst described heein has the following advantages:
1. The ruthenium-based nickel-aluminum catalyst for ammonia decomposition with ruthenium as the active component and nickel oxide and alumina as a carrier, is helpful to promote adsorption and dissociation of ammonia and inhibit hydrogen adsorption, thereby achieving efficient high-flow ammonia decomposition and enhancing efficiency of hydrogen production. It was experimentally verified that using the catalyst described herein, the concentration of residual ammonia in the emission gas can be surprisingly reduced to less than 0.1 vol% at a reaction temperature of 550-600°C with a gas hourly space velocity of 6000 h⁻¹ of ammonia, and such a conversion is close to the highest conversion limited by the thermodynamics of the ammonia decomposition reaction.
2. The ruthenium-based nickel-aluminum catalyst for ammonia decomposition has excellent ammonia conversion activity and stability and the ammonia decomposition temperature can be reduced by about 200°C, compared to the iron-based catalysts currently used in industry.
3. The method of preparing the ruthenium-based nickel-aluminum catalyst for ammonia decomposition described herein is simple, and has a low synthesis cost.
4. The ruthenium-based nickel-aluminum catalyst for ammonia decomposition described herein comprises ruthenium as the main active component, wherein, ruthenium is in an amount of 1-5% by mass of the carrier. The content of the precious metal active component in the catalyst can be minimized by limiting the mass percentage of the active component, thus achieving a balance between ammonia decomposition efficiency and manufacturing cost.
5. In the ruthenium nickel-aluminum catalyst for ammonia decomposition described herein, the specific contents of the carrier and the promoter allow the active component to be evenly distributed on the carrier, which can enhance the electron transfer, facilitate the adsorption and dissociation of ammonia, and inhibit the adsorption of hydrogen, thereby achieving excellent high-flow ammonia decomposition, and enhancing the efficiency of hydrogen production.
4. According to the ruthenium-based nickel-aluminium catalyst for ammonia decomposition described herein, wherein the nickel oxide and alumina are crushed by a pulverizer, respectively. The active component can be allowed be evenly distributed on the carrier by controlling the particle size of the carrier.
5. According to ruthenium-based nickel-aluminium catalyst for ammonia decomposition described herein, wherein the active component can be allowed be evenly distributed on the carrier by using different combinations of the active component with the promoter, thus enhancing the interaction between the carrier and the active component.
6. According to the ruthenium-based nickel-aluminum catalyst for ammonia decomposition described herein, the dispersant can enhance the dispersion of the catalyst for ammonia decomposition and the heat transfer efficiency of the catalytic system, thereby increasing the efficiency of energy use and facilitating ammonia decomposition.

The technical solutions described hereinare described clearly and completely below, and it is clear that the examples described below are a part of the examples of the present disclosure, and not all of them. Based on the examples in the present disclosure, all other examples obtained by a person of ordinary skill in the art without undue labor fall into the scope defined by the appended claims.

### Examples

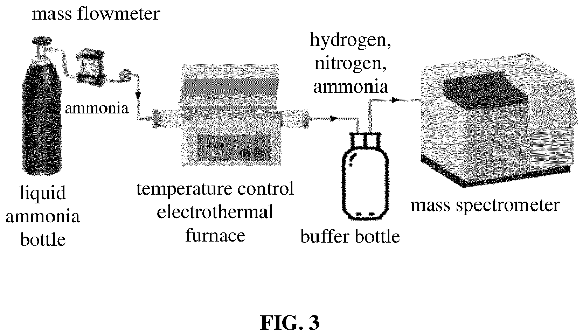

An exemplary system for decompsing ammonia using the catalyst described herein and monitoring the reaction products is illustrated in Fig. 3. A person skilled in the art is familiar with devices and methods for catalytic decomposition of ammonia, and can make different choices and combinations according to practice.

Before beginning of a experiment, the ammonia bottle was opened and the flow rate of the mass flowmeter was adjusted to 200 mL/min. The reactor was heated to 700°C at a rate of 5°C/min, and maintained at 700°C for 2h for completion of activation of the catalyst. The reactor was then cooled down to 500°C and maintained for 40 min until the temperature of the catalyst dropped to the reaction temperature. Then the ammonia flow rate was adjusted to make GHSV=6000 h⁻¹, and the ammonia gas was put into the reactor, and entered into the buffer bottle after decomposition by the catalyst, and finally into the mass spectrometer for the conversion test. The reactor was heated from 500°C to 700°C at a gradient of 25°C, and in doing so, eight temperature test points were taken. The tail gas of 50 mL/min was shunted into the mass spectrometer HPR-20 EGA from Hiden Analytical, and analyzed for composition at each temperature test point.

### Example 1

Alumina and nickel oxide (both in 18-45 mesh) were physically mixed at an aluminum/nickel molar ratio of 4.5:1. 40.42 g of the resulting mixture was placed in a vacuum oven and allowed to stand at 60°C for 24h. 1.68 g of ruthenium chloride and 15.37 g of calcium acetate were added to deionized water (approx. 550 mL) and stirred for 30 min at 750 rpm. 40.42 g of dried alumina and nickel oxide were added to the solution of ruthenium chloride and calcium acetate. The resulting mixture was stirred for 15 min, and then allowed to stand for 30 min. Sodium hydroxide solution was added to the mixture and stirred for 30 min. The mixture was subjected to suction filtration and washing with deionized water. The resulting sample was placed in a vacuum oven and heated at 95°C under in vacuo for 24h. After drying, the sample was placed in a tube furnace, aerated with hydrogen gas, and maintained under hydrogen gas for 30 min. The sample was heated to a reaction temperature of 550°C at a rate of 5°C per minute, and reacted continuously for 4h under hydrogen atmosphere. After the reaction was complete, the sample was allowed to cool to the room temperature. The reaction mass was recovered and screened through 18 and 45 mesh filters. The alumina and nickel oxide comprising calcium and ruthenium were then placed in a 1/2" 316 stainless steel tube, and activated with ammonia for 4h, and then, the change in the conversion of ammonia decomposition at different temperatures was measured by a mass spectrometer at a gas hourly space velocity (GHSV) = 6000 h⁻¹. As a result, the conversion was found to be 99.3% ± 0.5% at 600°C and 99.6 ± 0.5% at 650°C.

### Example 2

42.01 g of alumina (in 60-80 mesh) was placed in a vacuum oven and heated at 95°C in vacuo for 2h. 51.26 g of nickel acetate and 15.97 g of calcium acetate were added to deionized water (approx. 600 mL) and stirred for 30 min at 750 rpm. 42.01 g of dried alumina was poured into the solution of nickel acetate and calcium acetate, and stirred for 5 min, and then the solution was allowed to stand for 30 min. The resulting sample was subjected to suction filtration, placed in a vacuum oven and heated at 95°C in vacuo for 24 hr. After drying, the sample was placed in a muffle furnace, heated to a reaction temperature of 550°C at a rate of 5°C per minute, and calcined with air for 4h, and then allowed to cool down to the room temperature. The reaction mass was then recovered and 27.35 g of this mass was placed in a vacuum oven and heated at 95°C in vacuo for 2h. 0.57 g of ruthenium chloride was added to deionized water (approx. 600 mL) and stirred for 30 min at 750 rpm. 27.35 g of alumina comprising calcium and nickel was added into the solution of ruthenium chloride, and the stirring speed was reduced to 500 rpm, and then the solution was allowed to stand for 30 min. The sample was filtered, placed in a vacuum oven, and heated in vacuo at 95°C for 24h. After drying, the sample was placed in a tube furnace, exposed to hydrogen gas and maintained under hydrogen gas for 30 min. The sample was was heated to a reaction temperature of 550°C at a rate of 5°C per minute, and reacted continuously for 4h under hydrogen atmosphere, then allowed to cool down to the room temperature naturally. After the reaction was completed, the reaction mass was recovered and screened through 45 and 60 mesh filters. The alumina comprising nickel, calcium and ruthenium was then placed in the 1/2" 316 stainless steel tube, and activated with ammonia for 4h, and then the change in the conversion of ammonia decomposition at different temperatures was measured by the mass spectrometer at GHSV=6000 h⁻¹. As a result, the conversion was found to be 99.2 ± 0.5% at 600°C, and 99.4 ± 0.5% at 650°C.

### Example 3

Alumina and nickel oxide (both in 45-60 mesh) were physically mixed at an aluminum/nickel molar ratio of 4.5:1. 15.24 g of the resulting mixture was placed in the vacuum oven and allowed to stand for 24h at 95°C. 0.32 g of ruthenium chloride and 5.79 g of calcium acetate were added to deionized water (approx. 250 mL) and stirred for 30 min at 750 rpm. All the mixture of dried alumina and nickel oxide was poured into the solution of ruthenium chloride and calcium acetate, and the stirring speed was reduced to 500 rpm and kept for 5 min, then the solution was allowed to stand for 5 min. Stirring and standing were repeated at least three times. The mixture was subjected to suction filtration and the resulting sample was placed in the vacuum oven and allowed to stand for 24h at 95°C. After drying, the sample was placed in the tube furnace, exposed to hydrogen gas and maintained under hydrogen gas for 30 min. The sample was heated to a reaction temperature of 550°C at a rate of 5°C per minute and reacted continuously for 4h under hydrogen atmosphere, then allowed to cool down to the room temperature naturally. After the reaction was completed, the reaction mass was recovered and screened through 45 and 60 mesh filters. The alumina and nickel oxide comprising ruthenium were then placed in the 1/2" 316 stainless steel tube and activated with ammonia for 4h, and then the change in the conversion of ammonia decomposition at different temperatures was measured by the mass spectrometer at GHSV=6000 h⁻¹. As a result, the conversion was found to be 99.9±0.5% at 550°C and 99.9±0.5% at both 600°C and 650°C.

### Example 4

Alumina and nickel oxide (both in 45-60 mesh) were physically mixed at a molar ratio of 4.5:1. 13.32 g of the resulting mixture was placed in the vacuum oven and allowed to stand for 24h at 95°C. 0.28 g of ruthenium chloride, 0.30 g of potassium hydroxide and 5.06 g of calcium acetate were added to deionized water (approx. 200 mL) and stirred for 30 min at 750 rpm. All the mixture of dried alumina and nickel oxide was poured into the solution of ruthenium chloride, potassium hydroxide and calcium acetate, and the stirring speed was reduced to 500 rpm and kept for 5 min, then the solution was allowed to stand for 5 min. Stirring and standing were repeated at least three times. The mixture was subjected to suction filtration, and washed with deionized water by suction filtration, then the resulting sample was placed in the vacuum oven, and allowed to stand for 24h at 95°C. After drying, the sample was placed in the tube furnace, exposed to hydrogen gas and maintained under hydrogen gas for 30 min. The sample was heated to a reaction temperature of 550°C at a rate of 5°C per minute, and reacted continuously for 4h under hydrogen atmosphere, then allowed to cool down to the room temperature naturally. After the reaction was completed, the reaction mass was recovered and screened through 45 and 60 mesh filters. The alumina and nickel oxide comprising calcium, potassium and ruthenium were then placed in the 1/2" 316 stainless steel tube, and activated with ammonia for 4h, and then the change in the conversion of ammonia decomposition at different temperatures was measured by the mass spectrometer at GHSV=6000 h⁻¹. As a result, the conversion was found to be 99.8 ± 0.5% at 650°C.

### Example 5

Alumina and nickel oxide (both in 45-60 mesh) were physically mixed at an aluminum/nickel molar ratio of 4.5:1. 12 g of the resulting mixture was placed in the vacuum oven and allowed to stand for 24h at 95°C. 0.25 g of ruthenium chloride and 4.56 g of calcium acetate were added to deionized water (approx. 250 mL) and stirred for 30 min at 750 rpm. All the mixture of dried alumina and nickel oxide was poured into the solution of ruthenium chloride and calcium acetate, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the tube furnace, exposed to hydrogen gas, and maintained under hydrogen gas for 30 min. The sample was heated to a reaction temperature of 550°C at a rate of 5°C per minute, reacted continuously for 4h under hydrogen atmosphere, then allowed to cool down to the room temperature naturally. After the reaction was completed, the reaction mass was recovered and screened through 45 and 60 mesh filters. The iron oxide powder (in 45-60 mesh) was then placed in the vacuum oven and allowed to stand at 95°C for 24 h. 2.29 g of iron oxide powder and 10.5 g of alumina and nickel oxide comprising calcium and ruthenium were physically mixed, placed in the 1/2" 316 stainless steel tube, and activated with ammonia for 4h, then the change in conversion of ammonia decomposition at different temperatures was measured by the mass spectrometer at GHSV=6000 h⁻¹. As a result, the conversion was found to be 99.7 ± 0.5% at 625°C and 99.89 ± 0.5% at 675°C.

### Example 6

Alumina and nickel oxide (both in 45-60 mesh) were physically mixed at an aluminum/nickel molar ratio of 4.5:1. 13.7 g of the resulting mixture was placed in the vacuum oven and allowed to stand for 24h at 95°C. 0.28 g of ruthenium chloride and 5.21 g of calcium acetate were added to deionized water (approx. 200 mL) and stirred for 30 min at 750 rpm. All the mixture of dried alumina and nickel oxide was poured into the solution of ruthenium chloride and calcium acetate, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the tube furnace, exposed to hydrogen gas, and maintained under hydrogen gas for 30 min. The sample was heated to a reaction temperature of 550°C at a rate of 5°C per minute, reacted continuously for 4 h under hydrogen atmosphere, then allowed to cool down to the room temperature naturally. After the reaction was completed, the reaction mass was recovered and screened through 45 and 60 mesh filters. Afterwards, the silicon carbide powder (in 45-60 mesh) was placed in the vacuum oven and allowed to stand for 24h at 95°C. 1.85 g of silicon carbide powder and 8.40 g of alumina and nickel oxide comprising calcium and ruthenium were physically mixed, placed in the 1/2" 316 stainless steel tube, and activated with ammonia for 4h, and then the change in the conversion of ammonia decomposition at different temperatures was measured by the mass spectrometer at GHSV=6000 h⁻¹. As a result, the conversion was found to be 99.8±0.5% at 625°C and 99.9±0.5% at 675°C.

### Example 7

Alumina and nickel oxide (both in 45-60 mesh) were physically mixed at an aluminum/nickel molar ratio of 4.5:1. 10.78 g of the resulting mixture was placed in the vacuum oven and allowed to stand for 24h at 95°C. 0.11 g of ruthenium chloride and 4.10 g of calcium acetate were added to deionized water (approx. 150 mL) and stirred for 30 min at 750 rpm. All the mixture of dried alumina and nickel oxide was poured into the solution of ruthenium chloride and calcium acetate, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the the tube furnace, exposed to hydrogen gas, and maintained under hydrogen gas for 30 min. The sample was heated to a reaction temperature of 550°C at a rate of 5°C per minute, and reacted continuously for 4h under hydrogen atmosphere, then was allowed to cool down to the room temperature naturally. After the reaction was completed, the reaction mass was recovered and screened through 45 and 60 mesh filters. The alumina and nickel oxide comprising ruthenium were then placed in the 1/2" 316 stainless steel tube, and activated with ammonia for 4h, and then the change in the conversion of ammonia decomposition at different temperatures was measured by the mass spectrometer at GHSV=6000 h⁻¹.

In this example, the conversion of ammonia decomposition was measured by the mass spectrometer and was found to be 99.6 ± 0.5% at 700°C.

### Example 8

10.19g of the active carbon was placed in the vacuum oven and allowed to stand for 24h at 95°C. 0.23g of ruthenium chloride and 3.95g of calcium acetate were added to deionized water (approx. 250 mL) and stirred for 30 min at 750 rpm. All the mixture of dried active carbon was poured into the ruthenium chloride and calcium acetate mixture, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the tube furnace, exposed to hydrogen gas and maintained under hydrogen gas for 30 min. The sample was heated to a reaction temperature of 550°C at a rate of 5°C per minute and reacted continuously for 4h under a hydrogen atmosphere, then allowed to cool down to room temperature naturally. After the reaction was completed, the reaction mass was recovered and screened through 45 and 60 mesh filters. The active carbon comprising ruthenium were then placed in the 1/2" 316 stainless steel tube and activated with ammonia for 4h, and then the change in the conversion of ammonia decomposition at different temperatures was measured by the mass spectrometer at GHSV=6000 h⁻¹. As a result, the conversion was found to be 6.01 ±0.5% at 550°C and 14.76±0.5% at both 600°C.

### Example 9

12.72g of the magnesium oxide was placed in the vacuum oven and allowed to stand for 24h at 95°C. 0.28g of ruthenium chloride and 4.93g of calcium acetate were added to deionized water (approx. 250 mL) and stirred for 30 min at 750 rpm. All the mixture of dried magnesium oxide was poured into the ruthenium chloride and calcium acetate mixture, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the tube furnace, exposed to hydrogen gas and maintained under hydrogen gas for 30 min. The sample was heated to a reaction temperature of 550°C at a rate of 5°C per minute and reacted continuously for 4h under a hydrogen atmosphere, then allowed to cool down to room temperature naturally. After the reaction was completed, the reaction mass was recovered and screened through 45 and 60 mesh filters. The magnesium oxide comprising ruthenium were then placed in the 1/2" 316 stainless steel tube and activated with ammonia for 4h, and then the change in the conversion of ammonia decomposition at different temperatures was measured by the mass spectrometer at GHSV=6000 h⁻¹. As a result, the conversion was found to be 10.50± 0.5% at 550°C and 28.17 ±0.5% at both 600°C.

### Example 10

9.387g of the aluminium oxide was placed in the vacuum oven and allowed to stand for 24h at 95°C. 0.219g of ruthenium chloride and 3.82g of calcium acetate were added to deionized water (approx. 250 mL) and stirred for 30 min at 750 rpm. All the mixture of dried aluminium oxide was poured into the ruthenium chloride and calcium acetate mixture, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the tube furnace, exposed to hydrogen gas and maintained under hydrogen gas for 30 min. The sample was heated to a reaction temperature of 550°C at a rate of 5°C per minute and reacted continuously for 4h under a hydrogen atmosphere, then allowed to cool down to room temperature naturally. After the reaction was completed, the reaction mass was recovered and screened through 45 and 60 mesh filters. The aluminium oxide comprising ruthenium were then placed in the 1/2" 316 stainless steel tube and activated with ammonia for 4h, and then the change in the conversion of ammonia decomposition at different temperatures was measured by the mass spectrometer at GHSV=6000 h⁻¹. As a result, the conversion was found to be 34.97 ± 0.5% at 550°C and 63.73 ±0.5% at both 600°C.

### Example 11

Alumina and nickel oxide (both 45-60 mesh) were physically mixed at an aluminium/nickel molar ratio of 4.5:1. 11.47g of the resulting mixture was placed in the vacuum oven and allowed to stand for 24h at 95°C. 0.254g of ruthenium chloride, 4.44g of calcium acetate, and 10.82g of lanthanum nitride were added to deionized water (approx. 250 mL) and the ruthenium chloride, calcium acetate, and lanthanum nitride mixture, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the tube furnace, exposed to hydrogen gas and maintained under hydrogen gas for 30 min. The sample was heated to a reaction temperature of 550°C at a rate of 5°C per minute and reacted continuously for 4h under a hydrogen atmosphere, then allowed to cool down to room temperature naturally. After the reaction was completed, the reaction mass was recovered and screened through 45 and 60 mesh filters. The alumina and nickel oxide comprising ruthenium, calcium, and lanthanum were then placed in the 1/2" 316 stainless steel tube and activated with ammonia for 4h, and then the change in the conversion of ammonia decomposition at different temperatures was measured by the mass spectrometer at GHSV=6000 h⁻¹. As a result, the conversion was found to be 28.30±0.5% at 550°C and 56.70±0.5% at both 600°C.

### Example 12

Alumina and nickel oxide (both 45-60 mesh) were physically mixed at an aluminium/nickel molar ratio of 4.5:1. 12.17g of the resulting mixture was placed in the vacuum oven and allowed to stand for 24h at 95°C. 0.517g of ruthenium chloride and 4.72g of calcium acetate were added to deionized water (approx. 250 mL) and stirred for 30 min at 750 rpm. All the mixture of dried alumina and nickel oxide was poured into the ruthenium chloride and calcium acetate mixture, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the tube furnace, exposed to hydrogen gas and maintained under hydrogen gas for 30 min. The sample was heated to a reaction temperature of 550°C at a rate of 5°C per minute and reacted continuously for 4h under a hydrogen atmosphere, then allowed to cool down to room temperature naturally. After the reaction was completed, the reaction mass was recovered and screened through 45 and 60 mesh filters. The alumina and nickel oxide comprising ruthenium were then placed in the 1/2" 316 stainless steel tube and activated with hydrogen for 4h, and then the change in the conversion of ammonia decomposition at different temperatures was measured by the mass spectrometer at GHSV=6000 h⁻¹. As a result, the conversion was found to be 49.48±0.5% at 550°C and 84.49±0.5% at both 600°C.

### Example 13

Alumina and nickel oxide (both 45-60 mesh) were physically mixed at an aluminium/nickel molar ratio of 4.5:1. 10.29g of the resulting mixture was placed in the vacuum oven and allowed to stand for 24h at 95°C. 0.228g of ruthenium chloride and 3.99g of calcium acetate were added to ethanol (approx. 250 mL) and stirred for 30 min at 750 rpm. All the mixture of dried alumina and nickel oxide was poured into the ruthenium chloride and calcium acetate mixture, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the tube furnace, exposed to hydrogen gas and maintained under hydrogen gas for 30 min. The sample was heated to a reaction temperature of 550°C at a rate of 5°C per minute and reacted continuously for 4h under a hydrogen atmosphere, then allowed to cool down to room temperature naturally. After the reaction was completed, the reaction mass was recovered and screened through 45 and 60 mesh filters. The alumina and nickel oxide comprising ruthenium were then placed in the 1/2" 316 stainless steel tube and activated with hydrogen for 4h, and then the change in the conversion of ammonia decomposition at different temperatures was measured by the mass spectrometer at GHSV=6000 h⁻¹. As a result, the conversion was found to be 45.23±0.5% at 550°C and 77.63 ±0.5% at both 600°C.

### Example 14

Alumina and nickel oxide (both 45-60 mesh) were physically mixed at an aluminium/nickel molar ratio of 4.5:1. 10.29g of the resulting mixture was placed in the vacuum oven and allowed to stand for 24h at 95°C. 0.228g of ruthenium chloride and 3.99g of calcium acetate were added to ethanol and DI water mixture v:v=1:1(approx. 250 mL) and stirred for 30 min at 750 rpm. All the mixture of dried alumina and nickel oxide was poured into the ruthenium chloride and calcium acetate mixture, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the tube furnace, exposed to hydrogen gas and maintained under hydrogen gas for 30 min. The sample was heated to a reaction temperature of 550°C at a rate of 5°C per minute and reacted continuously for 4h under a hydrogen atmosphere, then allowed to cool down to room temperature naturally. After the reaction was completed, the reaction mass was recovered and screened through 45 and 60 mesh filters. The alumina and nickel oxide comprising ruthenium were then placed in the 1/2" 316 stainless steel tube and activated with hydrogen for 4h, and then the change in the conversion of ammonia decomposition at different temperatures was measured by the mass spectrometer at GHSV=6000 h⁻¹. As a result, the conversion was found to be 48.97 ±0.5% at 550°C and 82.27 ±0.5% at both 600°C.

### Example 15

Alumina and nickel oxide (both 60-80 mesh) were physically mixed at an aluminium/nickel molar ratio of 4.5:1. 8.69g of the resulting mixture was placed in the vacuum oven and allowed to stand for 24h at 95°C. 0.193g of ruthenium chloride and 3.99g of calcium acetate were added to ethanol and DI water mixture v:v=1:1(approx. 250 mL) and stirred for 30 min at 750 rpm. All the mixture of dried alumina and nickel oxide was poured into the ruthenium chloride and calcium acetate mixture, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the tube furnace, exposed to hydrogen gas and maintained under hydrogen gas for 30 min. The sample was heated to a reaction temperature of 550°C at a rate of 5°C per minute and reacted continuously for 4h under a hydrogen atmosphere, then allowed to cool down to room temperature naturally. After the reaction was completed, the reaction mass was recovered and screened through 60 and 80 mesh filters. The alumina and nickel oxide comprising ruthenium were then placed in the 1/2" 316 stainless steel tube and activated with hydrogen for 4h, and then the change in the conversion of ammonia decomposition at different temperatures was measured by the mass spectrometer at GHSV=6000 h⁻¹. The experiment cannot finished due to sintering.

### Example 16

Alumina and nickel oxide (both 45-60 mesh) were physically mixed at an aluminum / nickel molar ratio of 4.5:1. 1 kg of the mixture was put it in a vacuum oven, and heated at 95 ° C for 24h. 20.9 g of ruthenium chloride and 380 g of calcium acetate were added into deionized water and stirred. The entire dry alumina, nickel oxide mixture was added to the ruthenium chloride and calcium acetate solution, with stirring, and then allowed to stand. After repeated stirring and standing still at least three times, The mixture was then suction filtered, and then the sample was placed in a vacuum oven and dried at 95°C. After the drying was complet, the sample was placed in a tube furnace, fed with hydrogen and maintained for 30 min. Heating at a rate of 5°C per minute to a reaction temperature of 550°C , heat treatment in a hydrogen atmosphere for 4h, and then naturally cooled down to room temperature. After the heating was over, take out the samples and filter them with 45 and 60 mesh filters. The above steps were repeated to obtain about 3kg of catalyst.

3 kg of catalyst obtained above was filled on average in eleven 1" 316 stainless steel tubes and activated with ammonia gas for 4h, and the the conditions of the conversion of ammonia decomposition at different temperatures were measured with a mass spectrometer . It was found that the conversion rate at 550°C was 92.72±0.5%, and the conversion rate at 600°C was 99.10±0.5%.

### Comparative Example 1

Alumina and nickel oxide (both in 45-60 mesh) were physically mixed at an aluminum/nickel molar ratio of 4.5:1. 14.24 g of the result mixture was placed in the vacuum oven and allowed to stand for 24h at 95°C. 5.41 g of calcium acetate was added to deionized water (approx. 300 mL) and stirred for 30 min at 750 rpm. 14.24 g of dried alumina and nickel oxide were poured into the solution of calcium acetate and stirred for 5 min, then the solution was allowed to stand for 30 min. The resulting sample was subjected to suction filtration, placed in the vacuum oven, and allowed to stand for 24h at 95°C. After drying, the samples were placed in the muffle furnace, heated to a reaction temperature of 550°C at a rate of 5°C per minute, and calcined with air for 4h, and then allowed to cool down to the room temperature naturally. After the reaction was completed, the reaction mass was recovered, and screened with 45 and 60 mesh filters. The mixture of alumina and nickel oxide comprising calcium was then placed in the 1/2" 316 stainless steel tube and activated with ammonia for 4h, and then the change in conversion of ammonia decomposition at different temperatures was measured by the mass spectrometer at GHSV=6000h⁻¹. As a result, the conversion was found to be 22.7% ± 0.5% at 600°C, 49.9 ± 0.5% at 650°C, and 99.7 ± 0.5% at 750°C.

### Comparative Example 2

Alumina and nickel oxide (both in 18-45 mesh) were physically mixed at an aluminum/nickel molar ratio of 4.5:1. 205 g of the resulting mixture was placed in the vacuum oven and allowed to stand for 24h at 95°C. 77.95 g of calcium acetate was added to deionized water (approx. 4500 mL) and stirred for 30 min at 750 rpm. 205 g of dried alumina and nickel oxide were poured into the solution of calcium acetate, stirred for 5 min, and then allowed to stand for 30 min. The resulting sample was subjected to suction filtration, placed in the vacuum oven and allowed to stand for 24h at 95°C. After drying, the sample was placed in the muffle furnace, heated to a reaction temperature of 550°C at a rate of 5°C per minute, and calcined with air for 4h, and then allowed to cool down naturally to the room temperature naturally. After the the reaction was completed, the reaction mass was recovered and screened through 18 and 45 mesh filters. The mixture of alumina and nickel oxide comprising calcium was then placed in the 1" 316 stainless steel tube and activated with ammonia for 4h, and then the change in the conversion of ammonia decomposition at different temperatures was measured by the mass spectrometer at GHSV=6000h⁻¹. As a result, the conversion was found to be 21.9% ± 0.5% at 600°C, 35.2 ± 0.5% at 650°C, 52.3 ± 0.5% at 700°C, 80.9 ± 1.0% at 750°C, and 99.6 % ± 0.5% at 800°C.

### Comparative Example 3

22.15 g of activated carbon, 78.68 g of magnesium oxide, 21.71 g of alumina (in 18-45 mesh) were placed in the vacuum oven and allowed to stand for 4h at 65°C. 5.0847 g of ruthenium chloride and 5.21 g of calcium acetate were added to 470 mL of ethanol and simultaneously stirred for 30 min at 750 rpm. After drying, the activated carbon, magnesium oxide, and alumina were added directly to the solution of ruthenium chloride and calcium acetate, and the solution was stirred for 15 min at a rotational speed 250 rpm, then allowed to stand for 30 min. The particles of activated carbon, magnesium oxide, alumina, and the remaining solution of ruthenium chloride and calcium acetate were placed in the vacuum oven, and allowed to stand for 2h at a low temperature of 60°C. A small amount of ethanol was added to the powder of ruthenium chloride and calcium acetate obtained by drying the sample. The dried activated carbon comprising ruthenium and calcium was added back to the above ethanol solution. The activated carbon comprising ruthenium was placed again in the vacuum oven, and allowed to stand for 2h at 60°C, and dried again. After drying, the resulting sample was placed in the tube furnace, exposed to nitrogen gas, and maintained under nitrogen gas for 30 min. The sample was heated to 600°C at a rate of 5°C per minute, reacted continuously under nitrogen atmosphere for 4h and, then allowed to cool down to the room temperature naturally. At the reaction was completed, the reaction mass was recovered and screened through a 45 mesh filter. The activated carbon comprising calcium and ruthenium, magnesium oxide and alumina were placed in the 1/2" 316 stainless steel tube and activated with ammonia for 4h, and then the change in conversion of ammonia decomposition at different temperatures was measured by the mass spectrometer at GHSV=6000h⁻¹. As a result, the conversion was found to be 29.3 ± 0.5 % at 600°C, 40.7 ± 0.5 % at 650°C, 53.6 ± 0.5 % at 700°C, and 60.8 ± 1.0 % at 750°C.

### Comparative Example 4

In this comparative example, the catalyst prepared in Example 3 was compared with nickel catalyst from Suzhouhengda clean equipment Corporation Limited (Mode: (Z-204)). Both the catalysts were screened with 45 mesh and 60 mesh filters, placed in the vacuum oven, and allowed to stand for 24h at 95°C. After drying, the catalysts were placed in the 1/2" 316 stainless steel tube, and activated with ammonia for 3h, and then the change in the conversion of ammonia decomposition at the temperatures from 500°C to 700°C was measured at GHSV=6000h⁻¹.

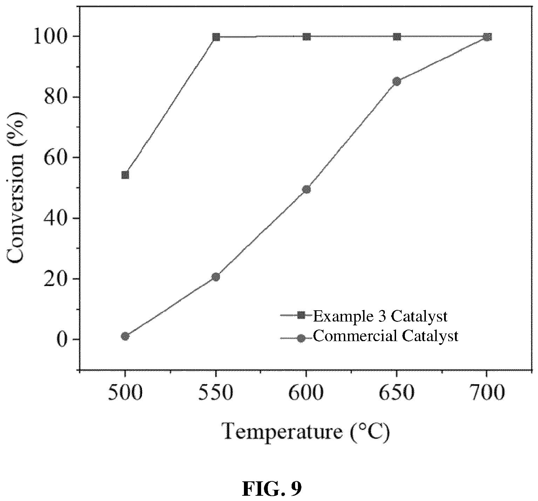

The results are presented in Fig. 9, which shows the catalyst described herein has a significantly higher conversion at low temperatures, e.g. 550°C, and approaches 100% with increasing temperature, compared to the commercial control product that had a conversion of 20.7% ± 1.0 % at the same reaction temperature.

### Comparative Example 5

Referring to the catalyst synthesis method in Example 3, Alumina and nickel oxide (both 45-60 mesh) were physically mixed at an aluminium/nickel molar ratio of 4.5:1. 19.81g of the resulting mixture was placed in the vacuum oven and allowed to stand for 24h at 95°C. 0.44g of ruthenium chloride and 7.68g of calcium acetate were added to deionized water (approx. 250 mL) and stirred for 30 min at 750 rpm. All the mixture of dried alumina and nickel oxide was poured into the ruthenium chloride and calcium acetate mixture, and the stirring speed was reduced to 500 rpm and kept for 5 min, then the solution was allowed to stand for 5 min. Stirring and standing were repeated at least three times. The mixture was subjected to suction filtration, and the resulting sample was placed in the vacuum oven and allowed to stand for 24h at 95°C. After drying, the sample was placed in the tube furnace, exposed to hydrogen gas and maintained under hydrogen gas for 30 min. The sample was heated to a reaction temperature of 550°C at a rate of 5°C per minute and reacted continuously for 4h under a hydrogen atmosphere, then allowed to cool down to room temperature naturally. After the reaction was completed, the reaction mass was recovered and screened through 45 and 60 mesh filters. The alumina and nickel oxide comprising ruthenium were then placed in the 1/2" 316 stainless steel tube and activated with hydrogen for 4h, and then the change in the conversion of ammonia decomposition at different temperatures was measured by the mass spectrometer at GHSV=6000 h⁻¹. As a result, the conversion was found to be 52.82±0.5% at 550°C and 89.60±0.5% at both 600°C.

It is shown in all of the above examples that the method of preparing the ruthenium-based nickel-aluminum catalyst described herein helps to reduce the temperature required for ammonia decomposition. It is clear that the catalyst described herein is suitable for industrialization and can achieve ammonia conversion with high space velocity at lower temperature after large-scale industrialization. Furthermore, the the catalyst described herein has the advantages, such as simple preparation, low synthesis cost, etc.

The foregoing examples are merely illustrated for clarity and are not intended to limit the manner of implementation. For a person of ordinary skill in the art, there are other variations or changes that can be made in different forms based on the above description. It is not necessary or possible to exhaust all embodiments herein. The obvious variations or changes derived therefrom are still within the scope of protection of the invention.

## Claims

1. A method for preparing a ruthenium-based nickel-aluminum catalyst comprising:
(a) adding a carrier comprising nickel oxide and alumina to a solution comprising a metal salt comprising a ruthenium ion as an active component and a promoter for impregnation; and
(b) drying and calcining the carrier comprising the ruthenium and the promoter obtained in step (a) for activation, to obtain the ruthenium-based nickel-aluminum catalyst for ammonia decomposition.

2. The method according to claim 1 further comprising a step (c) of adding a dispersant to the ruthenium-based nickel-aluminum catalyst obtained in step (b).

3. The method according to claim 1 or 2, wherein the carrier is prepared by mixing, crushing and drying the nickel oxide and alumina; and the mixed solution comprising the ruthenium ions and the promoter is prepared by dissolving the metal salt comprising the ruthenium ion and a metal salt of the promoter in deionized water simultaneously or separately.

4. The method according to claim 1 or 2, wherein the calcination for activation is performed at 350-900°C under an atmosphere comprising hydrogen, ammonia, or a mixture thereof for 3-5h.

5. The method according to claim 1 or 2, wherein the metal salt comprising the ruthenium ion comprises ruthenium chloride, ruthenium chloride hydrate, or a mixture thereof.

6. The method according to claim 1 or 2, wherein the promoter comprises one or more of sodium oxide, potassium oxide, calcium oxide, sodium hydroxide, potassium hydroxide, calcium hydroxide, sodium acetate, potassium acetate, and calcium acetate.

7. The method according to claim 2, wherein the dispersant comprises one or more of iron oxide, silicon carbide, activated carbon, and silicon oxide.

8. The method according to claim 2, wherein the ruthenium ion is in an amount of 0.5-5% by mass of the catalyst, the carrier is in an amount of 85-98%, and the promoter is in an amount of 1-10% by mass of the catalyst.

9. The method according to claim 1 or 2, wherein the molar ratio of the nickel oxide and the alumina to the carrier is from 1:4 to 1:5, respectively.

10. The method according to claim 2, wherein the mass ratio of the dispersant to the active component, the carrier, and the auxiliary is from 1:100 to 1:3.

11. The method according to claim 1 or 2, wherein the nickel oxide and the alumina are mixed and crushed at a molar ratio of 2:3 to 1:18.

12. The method according to claim 1 or 2, wherein the catalyst is subjected to activation twice, wherein the gas used during the first activation is a gas mixture of hydrogen and nitrogen with a 5% mass percent concentration of hydrogen in the mixture, and the gas used during the second activation is ammonia gas with a purity of 99.99%.

13. A ruthenium-based nickel-aluminum catalyst for ammonia decomposition, wherein the catalyst comprises ruthenium in an amount of 0.5-5%, a carrier comprising nickel oxide and alumina in an amount of 85-98%, and a promoter in an amount of 1-10%, by mass of the catalyst.

14. The catalyst according to claim 13, wherein the nickel oxide is NiO and the alumina is Al₂O₃; the molar ratio of the nickel oxide to the alumina is from 2:3 to 1:18; and the promoter comprises one or more of sodium oxide, potassium oxide, calcium oxide, sodium hydroxide, potassium hydroxide, calcium hydroxide, sodium acetate, potassium acetate, and calcium acetate.

15. The use of the catalyst according to claim 13 in catalytic production of hydrogen and nitrogen from ammonia.
